# EUROPEAN PATENT APPLICATION

(11) **EP 4 456 354 A1**
(43) Date of publication of application: **30.10.2024**
(21) Application number: 24163640.6
(22) Date of filing: 14.03.2024
(51) Int. Cl.: H02G 5/00, H01R 4/60

(54) **BUS BAR SYSTEM AND APPARATUS FOR BUS BAR CONNECTION**

(30) Priority: 23.04.2023 CN 202310445666
(71) Applicant: ABB Schweiz AG, 5400 Baden (CH)
(72) Inventor: LIANG, Zicheng, Xiamen, Fujian, 361000 (CN); YAN, Congming, Xiamen, Fujian, 361000 (CN); CHEN, XingJie, Xiamen, Fujian, 361001 (CN); HUANG, Liqun, Xiamen, Fujian, 361015 (CN)
(74) Representative: Zimmermann & Partner Patentanwälte mbB

(57) **Abstract**

The present disclosure relates to a bus bar system and an apparatus for bus bar connection. The bus bar system comprises: a plurality of members; a component configured to couple the plurality of members to form a connection portion comprising a cavity, and the component is arranged in the cavity. By employing the bus bar system and the apparatus for bus bar connection according to the present disclosure, it is possible to achieve a significant reduction in the number of parts for bus bar connection without requiring a large number of screws or electric field shieldings, eliminating the process of flattening both ends of the bus bars, improving the heat dissipation performance, improving the working efficiency thanks to simple, fast and reliable bus bar connection.

## Description

### FIELD

The present disclosure relates to a bus bar system and an apparatus for bus bar connection, and more particularly, to connecting a plurality of bus bars having a non-flat shaped end cross-section.

### BACKGROUND

Bus bars are widely known for use on cable bridges or in electrical equipment such as switch cabinets for transmission of electrical power. Bus bars are usually numerous in use and need to be connected to each other. For this purpose, conventional bus bar apparatus connects both ends of a bus bar to be connected with screws and then tightens them with nuts.

However, such the bus bar apparatus require a large number of screws, especially when the number of bus bars is large. If the bus bars are not flat, for example cylindrical, it is necessary to flatten both ends of the bus bar to be connected. This requires an extra processing step and is time consuming. In addition, the screws for connecting bus bars cause uneven electric field near the ends of the bus bars. In order to avoid inhomogeneities in the electric field, an additional electric field shielding is required.

### SUMMARY

The object of the present disclosure is to provide a bus bar system and apparatus for bus bar connection, at least partially solving the aforementioned problems in the prior art.

In a first aspect of the present disclosure, there is provided a bus bar system. The bus bar system comprises: a plurality of members; a component configured to couple the plurality of members to form a connection portion comprising a cavity, the connection portion having a non-flattened end cross-section and the component is arranged in the cavity.

By employing the bus bar system and the apparatus for bus bar connection according to the present disclosure, it is possible to achieve a significant reduction in the number of parts for bus bar connection without requiring a large number of screws or electric field shieldings, eliminating the process of flattening both ends of the bus bars, improving the heat dissipation performance, and improving the working efficiency due to the simple, fast and reliable bus bar connection.

Furthermore, the hollow cavity of the connection portion allows convection of the fluid within the cavity, thereby improving the heat dissipation performance of the bus bar system. With the component located in the cavity, no additional electric field shielding is required, thereby improving the insulating performance.

According to one or more embodiments, the component has an outer surface at least partially abutting an inner surface of the cavity, and a hole adapted to be passed through by a coupling to couple and fix the plurality of members. In this manner, face-to-face contact between the outer surface of the component and the inner surface of the cavity is achieved while the coupling and fixing the plurality of members to the component is simple.

According to one or more embodiments, the component comprises a plurality of first portions abutting each other, and each of the plurality of first portions comprises an end of a corresponding member of the plurality of members, and the coupling passes through the respective hole on the plurality of first portions to couple and secure the plurality of members. In this manner, the number of parts and assembly time is further reduced by further comprising first portions at the ends of the plurality of members, respectively.

According to one or more embodiments, the first portion is oriented perpendicular to a longitudinal cross-section of the connection portion. In this way, the fluid in the cavity is allowed to flow freely, thereby improving the heat dissipation performance by convection.

According to one or more embodiments, a plurality of holes are arranged at equidistant or non-equidistant positions from the same longitudinal cross-section of the connection portion and extending in a direction perpendicular to the first portions. The couplings can thus be positioned according to the desired separation distance and/or angle with respect to the longitudinal cross-section.

According to one or more embodiments, the bus bar system further comprises: an insulating member configured to surround an outer surface of the connection portion. Thereby, the insulating performance of the bus bar system can be further improved.

According to one or more embodiments, the ends of the plurality of members further comprise a plurality of cut-outes, such that the ends of the plurality of members deform when a force is applied to the plurality of members. Meanwhile, the use of the plurality of cut-outs ensures face-to-face contact between the inner surface of the cavity of the bus bar system and the other branch bus bar/primary bus bar mating portions connected to the bus bar system, also making the assembly step easier.

According to one or more embodiments, the plurality of couplings extend through the component and protrude from outer surfaces of the plurality of members so as to couple an additional member to the plurality of members in a direction not perpendicular to a longitudinal cross-section of the connection portion. In this way, it is possible to flexibly connect bus bars in multiple directions to the bus bar system.

According to one or more embodiments, there is a non-planar contact interface among the plurality of members. The electric field distribution on the outer surface of the bus bar system is thereby made more uniform.

According to one or more embodiments, the bus bar system further comprises: a fitting configured to surround the outer surface of the connection portion; and an additional member configured to be coupled and fixed to the connection portion by the fitting.

According to one or more embodiments, wherein the fitting comprises a plurality of parts configured to be completely separable from each other; or the plurality of parts are configured to be only partially separable from each other. This makes the bus bar system design flexible to couple additional parts.

According to one or more embodiments, wherein the longitudinal cross-section of the connection portion has a shape selected from one of: circular, elliptical, polygonal, polygonal with rounded corners.

Yet another aspect of the present disclosure provides apparatus for bus bar connection comprising a plurality of bus bars having hollow cavities; and a fitting, wherein the fitting couples and fixes the plurality of bus bars to each other, and the fitting has: a first end surrounding a portion of an outer surface of a first bus bar of the plurality of bus bars, and a second end surrounding a portion of an outer surface of a second bus bar of the plurality of bus bars.

According to one or more embodiments, wherein the fitting further comprises a third end, wherein the third end: surrounds another portion of an outer surface of a first bus bar of the plurality of bus bars; or surrounds a portion of an outer surface of a third bus bar of the plurality of bus bars.

Another aspect of the present disclosure provides an electrical assembly comprising the bus bar system according to any of the preceding embodiments.

Yet another aspect of the present disclosure provides electrical equipment comprising the electrical assembly according to the above embodiments.

The foregoing directed to aspects and advantages of the apparatus also applies to electrical devices according to the present disclosure, which is not repeated herein.

### BRIEF DESCRIPTION OF THE DRAWINGS

Other advantages and designs of the present disclosure are described in detail below with reference to the drawings, wherein:
FIGS. 1A and 1B illustrate schematic diagrams of bus bars connections according to the prior art;
FIG. 2 illustrates a schematic diagram of bus bar connection according to the present disclosure;
FIG. 3 illustrates a cross-sectional view of a bus bar system of the present disclosure used to connect bus bars according to the embodiment shown in FIG. 2;
FIG. 4A illustrates a schematic diagram of a bus bar system according to another embodiment of the present disclosure;
FIG. 4B illustrates a schematic diagram of a bus bar system according to another embodiment of the present disclosure;
FIG. 4C illustrates an enlarged cross-sectional view of a connection portion of the bus bar system of FIG. 4B;
FIG. 5 illustrates a schematic diagram of a bus bar system according to another embodiment of the present disclosure;
FIG. 6 illustrates a schematic diagram of a bus bar system according to yet another embodiment of the present disclosure; and
FIG. 7 illustrates a schematic diagram of an apparatus for bus bar connection according to yet another aspect of the present disclosure.

### DETAILED DESCRIPTION OF EMBODIMENTS

Corresponding numerals and symbols in the different figures generally refer to corresponding areas unless otherwise indicated. The drawings are drawn to clearly illustrate the relevant aspects of the embodiments and are not necessarily drawn to scale. The edges of the features drawn in the figures do not necessarily indicate the termination of the feature range.

In the following depiction, numerous specific details are set forth in order to provide a thorough understanding of various examples of embodiments according to the description. Embodiments may be practiced without one or more of the specific details, or with other methods, parts, materials, etc. In other instances, well-known structures, materials, or operations are not shown or described in detail to avoid obscuring aspects of the embodiments.

Reference in the context of this specification to "one embodiment" or "an embodiment" is intended to indicate that a particular configuration, structure, or characteristic described in connection with the embodiment is comprised in at least one embodiment. Thus, phrases such as "in an embodiment", "in one embodiment", and the like that may appear in various aspects of the specification are not necessarily all referring to the same embodiment. Furthermore, the particular configurations, structures, or characteristics may be combined in any suitable manner in one or more embodiments.

The headings/reference signs used herein are provided for ease of reading only and thus do not limit the scope of protection or the scope of the embodiments. The same or similar parts are identified with the same reference numerals.

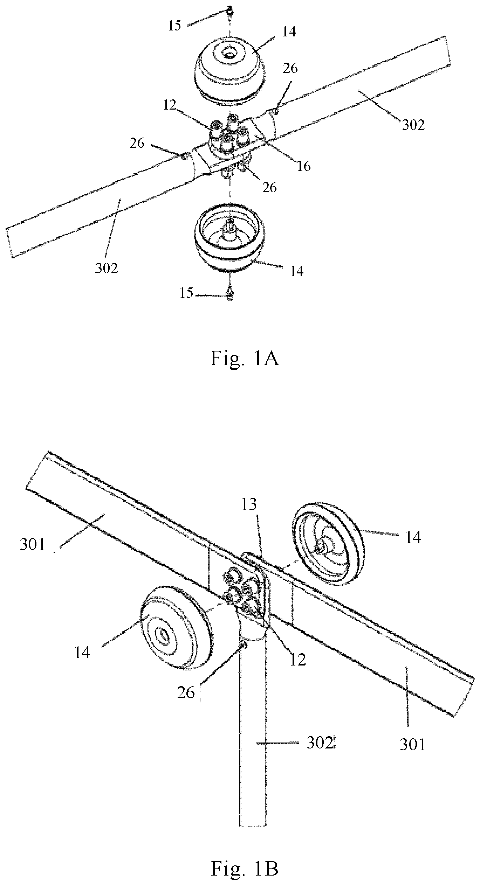

A case where a bus bar is connected using an apparatus according to the conventional art is first described with reference to FIGS. 1A through 1B. The bus bar is not limited to a full-flat bus bar 301, and in recent years, bus bars having a circular cross-section, such as cylindrical bus bars, have been increasingly used due to excellent current carrying capacity, structural strength, and insulation performance. For such a bus bar with a circular cross-section, it cannot be connected with screws alone. In order to connect a bus bar having a circular cross-section, a person is required to presses an end of the bus bar having a circular cross-section flat in the manner of the full-flat bus bar 301, and then fixes the connection of the flattened bus bar with a screw. This connecting manner for a bus bar having a circular cross-section is shown in FIG. 1A, where two end-flat bus bars 302 having circular cross-section are shown, and they are arranged in an "I" shape and provided with heat dissipation holes 26 for dissipiting heat caused by current flowing through them. The two end-flat bus bars 302 are connected to each other at their flat ends 16 using four screws 12 and fastened with nuts 13. On the other hand, however, these screws 12 may cause an uneven electric field at a flat end 16. In order to solve this problem, an additional electric field shielding 14 made of aluminum is used and fixed at the flat end 16 with a fixing members 15, covering the screws 12. This connecting and fixing manner can also be used to connect three or more bus bars, and can also be used to connect a full-flat bus bar 301 with the end-flat bus bar 302 having a circular cross-section, as shown in FIG. 1B, wherein two full-flat bus bars 301 and one end-flat bus bar 302 form a "T" shape.

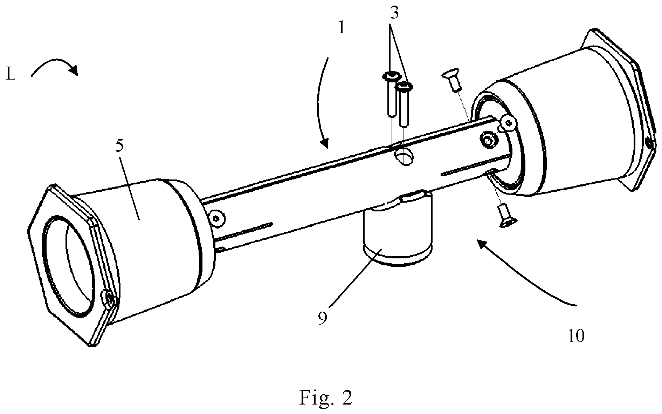

As described above, the fixing manner of the bus bar using the screw has many disadvantages, such as a large number of parts for fixing, an increased flattening process of the bus bar end, the need for an additional electric field shielding, etc. In order to solve these problems in the conventional solutions, the present disclosure proposes an apparatus for bus bar connections to connect a plurality of bus bars 300 having a circular end cross-section, such as cylindrical bus bars. Exemplary embodiments of bus bar apparatus according to the present disclosure will be described in detail below in conjunction with FIGS. 2-6. According to exemplary embodiments of the present disclosure, a number of parts may be coupled and fixed to one another by single component may eliminate the large number of parts required in conventional bus bar fixing manners. Further, according to exemplary embodiments of the present disclosure, the coupled plurality of members form a connection portion having a non-flat cross-section such that the assembled apparatus is suitable for connection with a bus bar having a non-flat cross-section, thereby eliminating the need for a bus bar end flattening process as required in conventional processes. Exemplary embodiments of the present disclosure also improve electric field shielding performance by completely concealing the components and coupling within the device, thereby eliminating the need for additional electric field shielding in conventional bus bar fixing manner. Further, according to exemplary embodiments of the present disclosure, the heat dissipation performance of the apparatus is improved by means of thermal convection by allowing the fluid filled in the cavity of the apparatus to flow freely.

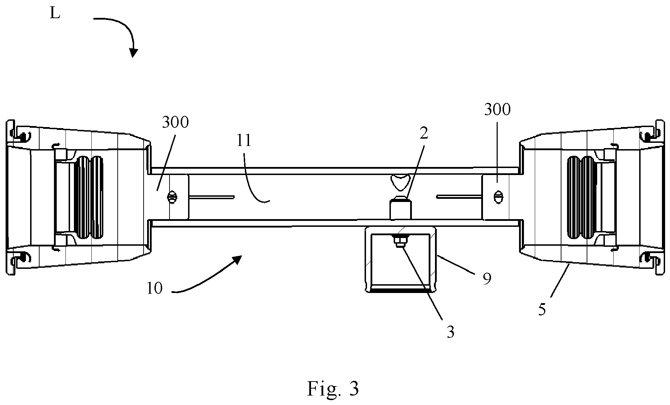

Referring to FIGS. 2 and 3, connection of two copper bus bars 300 having circular cross-sections or having circular end cross-sections are shown in accordance with a bus bar system L of the present disclosure, such as in a switch cabinet, and FIG. 3 shows a cross-sectional view of the system L of FIG. 2. That is, the bus bar system L of the present disclosure may be used for a bus bar having a circular cross-section throughout the whole body, or may be used for a bus bar having a circular cross-section only at the ends. However, it should be noted that the bus bar system L of the present disclosure may also be applied to any other electrical equipment using bus bars, cable bridges, and the present disclosure is not limited thereto. FIG. 2 shows a schematic view of coupling together a number of members 1 using a coupling 3 and a component 2 (not visible in Fig. 2). FIG. 2 shows the case of two couplings 3, but the solution of the present disclosure is not limited thereto and fewer or more couplings 3 may be used, e. g., one, four or more couplings 3 may be used. According to other aspects of the present disclosure, the plurality of members 1 may be coupled with the component 2 by other joining means, such as welding, without using the couplings 3. The members 1 coupled together form a connection portion 10 having a non-flat cross-section, in the example shown in Fig. 2, a circular cross-section. In the example shown in FIG. 3, the primary bus bars 300 protrude from an insulating protector 5 at the ends thereof, and are inserted into the connection portion 10 of the system L from both ends.

As shown in FIG. 2, the coupling can be concealed in the members 1 when a plurality of bus bars having a circular end cross-section are connected using the disclosed bus bar system L. In some examples, such a coupling may be, for example, a countersunk screw, a welded joint, etc. In some examples, counterbores may be provided on the surface of the members 1 to cooperate with countersunk screws for fastening bus bars. The outer surface of coupled bus bar system L is thereby kept free of protrusions. By making the outer surface of the bus bar system L free of protrusions, the uniformity of the electric field in the system L can be improved.

With continued reference to FIG.3, it is shown that the component 2 is arranged in a cavity 11 formed by the coupled members 1. In particular, the component 2 has an outer surface which at least partially, preferably entirely, abuts the inner surface of the cavity 11. It is thereby possible to have a surface-to-surface contact between the component 2 and the plurality of members 1 coupled together when the plurality of members 1 are coupled together. According to some embodiments, the bus bar system L shown in FIGS. 2 and 3 may also have the connection portion 10 comprising a single body member 1. For example, the members 1 may have a tubular bus bar comprising the cavity 11, and both ends of the single body members 1 are connected to the primary bus bar 300. The component 2 is arranged in the cavity 11, so as the outer surface of the bus bar system L does not have any protrusions. In this manner, the system L can have a uniform electric field when conducting.

Also shown in FIG.3 is an additional member 9, wherein the additional member 9 extends in a direction different from the extending directionof the members 1. Although FIG. 3 only illustrates that the primary bus bar 300 surrounded by the insulating protector 5 is connected at both horizontal ends of the system L, it is understood that the bus bar 300 may also be connected in additional directions. For example, additional bus bars may be connected in the vertical direction using 9 shown in FIG.3. In the situation shown in FIG. 3, the coupling 3 extends through the component 2 and protrudes from the outer surface of the members 1, extending into the additional member 9. One or more additional members 9 are thereby coupled and fixed to the members 1, and thus to the system L, in a direction not perpendicular to the circular cross-section of the connection portion 10. In other words, in the manner shown in FIG. 3, it is possible to connect bus bars not only in an "I" shape, but also in multiple directions by coupling one or more additional members 9. For example, a "T" connection may be made in one or more embodiments. Further in this way, although not shown in FIG. 3, it will be appreciated that it is also possible to make the coupling 3 protrude from the outer surface of the members 1 in two opposite directions, which in turn is suitable for the "+" shape connection of the bus bar. For example, the coupling 3 may protrude from the outer surface of the members 1 in both up and down directions, thereby coupling the additional members 9 to the members 1 in both up and down directions. Although an "I" straight line connection and a "T" and/or "+" shape connection to a bus bar are discussed herein, the scope of the present disclosure is not limited thereto. That is, by adjusting the angles of the component 2 and the coupling 3, the additional member 9 and the bus bar can be coupled at any angle with the bus bar system of the present disclosure. Since the end of the coupling 3 remains in the cavity of the members 1 and/or the cavity of the additional member 9 without protruding outside the system L regardless of whether the additional member 9 is coupled or not, the system L has a uniform electric field, and the electric field shielding in the conventional art can be omitted. Furthermore, since the coupled members 1 form the cavity 11 having a non-flat cross-section, the fluid in the cavity 11 can flow freely. Convection of fluid through the cavity 11 can improve the heat dissipation of the system L. In addition, although the embodiment of FIGS. 2 and 3 illustrates the primary bus bar 300 surrounded by the insulating protector 5, the primary bus bar 300 may be directly connected to the system L as needed without the insulating protector 5.

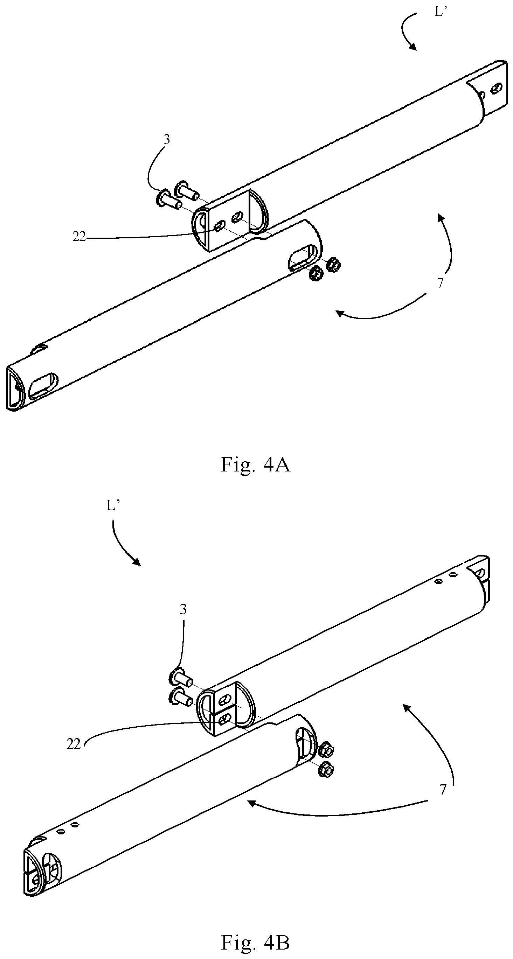

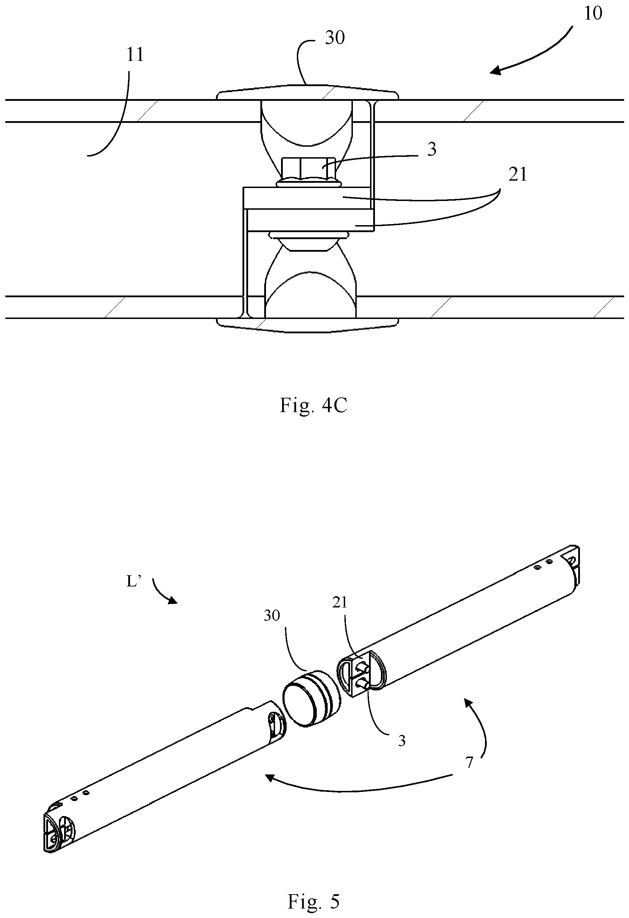

An embodiment according to another aspect of the present disclosure is described below in conjunction with FIGS. 4A-4C. Note that FIGS. 4A to 4C show only a connection portion of the system L', and do not show the primary bus bar connected at both ends thereof. Although the system L' is not shown in FIGS. 4A to 4C, it will be understood by those skilled in the art that the length of the system L' may be adjusted by attaching a plurality of members 7, and the bus bar may be connected at the end of the member 7 located at the outermost side. In the embodiment illustrated in FIGS. 4A to 4C, the component 2 of the system L' is formed by a plurality of first portions 21 abutting against one another. As shown in the transverse sectional view of FIG. 4C, a plurality of first portions 21 are respectively formed by the ends of the plurality of members 7, wherein the first portions 21 extend in a direction perpendicular to the non-flat cross-section of the connection portion 10 formed by the coupled plurality of members 7, and the plurality of first portions 21 abutting each other form the component 2 of the system L'. The plurality of members 7 are coupled and fixed to each other by placing the coupling 3 through respective holes 22 provided on each of the plurality of first portions 21 to face and fix the plurality of first portions 21 to each other.

In the example illustrated in FIG. 4A, the plurality of holes 22 provided on the first portions 21 are provided at positions that are not equidistant from the same cross-section of the connection portion 10 and extend in a direction perpendicular to the first portions 21. In this case, when the plurality of members 7 are coupled together using the plurality of couplings 3, the plurality of couplings 3 extend in the cavity 11 in a direction perpendicular to the same cross-section of the connection portion 10 (or at an angle of less than 90 degree from this direction). In this way, the fluid in the cavity 11 can flow easier, so that the heat dissipation performance of the system L' is improved.

In the example illustrated in FIG. 4B, the plurality of holes 22 provided on the first portions 21 are provided at positions equidistant from the same cross-section of the connection portion 10 and extend in a direction perpendicular to the first portions 21. In this case, a cut-out may be provided in the first portions 21 between the plurality of holes 22 in order to allow multi-point/multi-face contact when coupling the plurality of members 7, thereby making the system L' easier to assemble.

Furthermore, the examples shown in FIGS. 4A-4C also allow the coupling 3 to extend through the component 2 and protrude from the outer surface of the members 1, allowing the system L' to be similarly coupled with the additional member 9 as described above for the system L in relation to FIG.3, the disclosure of which is not repeated here.

As shown in FIGS. 2 to 4C, the contact interfaces between the plurality of members 1 and the additional member 9 are non-planar. Thereby, there is no protrusion or any sharp end between the coupled members 1 and the additional member 9, thereby further improving the electric field uniformity of the bus bar system L, L'. However, the scope of the present disclosure is not limited to this, and in an embodiment not shown, there may also be a planar contact interface between the members 1 and the additional member 9.

FIG. 5 illustrates a schematic view of an apparatus for bus bar connection according to another embodiment of the present disclosure. An insulating member 30 is also illustrated in FIGS. 4C and 5. The insulating member 30 is configured to surround the outer surface of the connection portion 10. The insulating member 30 surrounding the connection portion 10 may function as a further electric field shielding, thereby further improving the electrical performance of the system L, L'. It is noted that although FIGS. 4C and 5 only show the outer surface of the system L' being surrounded by the insulating member 30, the insulating member 30 is equally applicable to the system L described in relation to Figs. 2 and 3. Further, although FIGS. 4C and 5 show that only a part of the outer surface of the system L' is surrounded by the insulating member 30, the entire outer surface of the system L' may be surrounded by the insulating member 30.

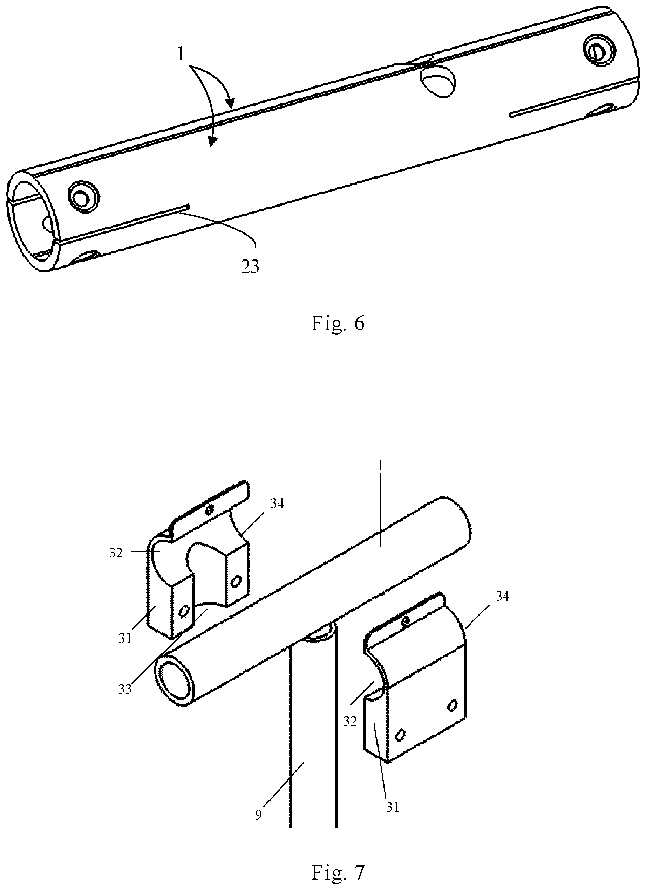

FIG. 6 illustrates that the ends of the members 1, 7 may comprise cut-outs 23. In some embodiments, the cut-outs 23 are adapted to deform the ends of the members 1, 7 when the system L, L' is subjected to forces introduced by the insertion of the primary bus bar 300, to make the bus bar system easier to connect with the primary bus bar 300.

According to one or more embodiments, while the present disclosure describes a system L, L' having a circular cross-section, the scope of the present disclosure is not limited thereto. The cross-section of the system L, L' may be in any shape suitable for connection with the bus bars connected therewith. For example, the cross-section of the system L, L 'may have be in a shape selected from any one of: circular, elliptical, polygonal, polygonal with rounded corners, and the specific shape can be designed according to different usage scenarios, and scopes of the present disclosure are not limited to examples listed herein.

FIG. 7 is a schematic view of an apparatus for bus bar connection according to the present disclosure. For example, FIG. 7 illustrates a plurality of fittings 31 that, when coupled together, surround at least a portion of the outer surface of the members 1 of system L (L '). In some embodiments, the members 1 and 9 in FIG. 7 are one-piece, entirely hollowed bus bars, and/or members 1 and 9 are bus bars comprising a plurality of sub-members coupled by the fittings 31. One skilled in the art can envisage ways to couple and fix the plurality of fittings to each other, and the scope of the present disclosure is not limited in any way herein. For example, the plurality of fittings 31 may also be coupled on one side by a hinge such that the fittings may open on the side opposite the hinged side. It is shown, in FIG. 7, the additional member 9 coupled to the connection portion 10 by means of the plurality of fittings 31, whereby an additional bus bar is connected. For example, the fittings 31 may have a first end 32 surrounding a portion of the outer surface of the members 1 or the first bus bar 1 and a second end 33 surrounding a portion of the outer surface of the member 9 or the second bus bar 9. For example, the fittings 31 may also have a third end 34 surrounding another portion of the outer surface of the first bus bar 1, or a portion of the outer surface of a third bus bar, not shown. The plurality of fittings 31 may be coupled to each other and to the members 1 by any means known in the art. For example, the plurality of fittings 31 may be coupled to each other by any means such as screws, welding, integrally formed, etc. It is to be noted that FIG. 7 shows that the additional member 9 is connected to the connection portion 10 in a direction perpendicular to the extending direction of the connection portion 10 using the fittings 31, but a person skilled in the art can flexibly modify the connecting direction of the fittings 31 and thus the connecting direction of the additional member 9 according to design requirements.

In the example shown in FIG. 7, the ends of the additional member 9 are inserted into the plurality of fittings 31 coupled together, but the embodiment of the present disclosure is not limited thereto. In some embodiments, the additional member 9 may be coupled and fixed with the plurality of fittings 31 by abutting the end of the additional member 9 against the fittings 31. In still other embodiments not shown, the additional member 9 may surround the outer surface of the plurality of fittings 31 so as to be coupled with the plurality of fittings 31 and further coupled to the connection portion 10 of the connecting system L (L').

In some embodiments, the plurality of additional members 1 may also be coupled by the fittings 31. That is, the plurality of connection portion 10 of the connecting system L (L') extending in the same extending direction may be coupled and fixed to each other using the fittings 31.

According to another aspect, the present disclosure also relates to an electrical assembly comprising a primary bus bar 300 having a non-flat end cross-section, and the bus bar system L, L' connected to the primary bus bar 300. The aspects and advantages described above with respect to the bus bar system L, L' apply correspondingly to the electrical assembly according to the present disclosure, which is not repeated here.

According to yet another aspect, the present disclosure further relates to the electrical equipment comprising the electrical assembly according to the above. The aspects and advantages described above with respect to the apparatus apply correspondingly to the electrical device according to the present disclosure, which is not repeated here. The electrical equipment according to the present disclosure is, for example, but not limited to, a switch cabinet in which a bus bar apparatus according to the present disclosure is disposed, a cable bridge, etc.

Many modifications and other embodiments of the disclosure set forth herein will come to mind to one skilled in the art to which this disclosure pertains having the benefit of the teachings presented in the foregoing descriptions and the associated drawings. Therefore, it is to be understood that the embodiments of the disclosure are not to be limited to the specific embodiments disclosed and that modifications and other embodiments are intended to be comprised within the scope of the disclosure. In addition, while the above description and related drawings describe example embodiments in the context of certain example combinations of features and/or functions, it should be appreciated that different combinations of features and/or functions may be provided by alternative embodiments without departing from the scope of the present disclosure. In this regard, for example, other combinations of features and/or functions different from those expressly described above are also contemplated as being within the scope of the present disclosure. Although specific terms are employed herein, they are used in a generic and descriptive sense only and not for purposes of limitation.

## Claims

1. A bus bar system (L; L') comprising:
a plurality of members (1; 7);
a component (2) configured to couple the plurality of members (1; 7) together to form a connection portion (10) comprising a cavity (11), and the component (2) being arranged in the cavity (11).

2. The bus bar system (L) according to claim 1, wherein the component (2) has an outer surface at least partially abutting an inner surface of the cavity (11), and the component (2) comprises a hole (22) adapted to be passed through by a coupling (3) to couple and fix the plurality of members (1).

3. The bus bar system (L') according to any one of claims 1 and 2, wherein the component (2) comprises a plurality of first portions (21) abutting each other, and each of the plurality of first portions (21) comprises an end of a corresponding member of the plurality of members (7), and a coupling (3) passes through a respective hole (22) on the plurality of first portions (21) to couple and fix the plurality of members (7), particularly wherein the first portions (21) is oriented perpendicular to a longitudinal cross-section of the connection portion (10).

4. The bus bar system (L') according to claim 3, wherein the hole (22) comprises a plurality of the holes arranged at equidistant or non-equidistant positions from the same longitudinal cross-section of the connection portion (10) and extending in a direction perpendicular to the first portions (21).

5. The bus bar system (L; L') according to any one of claims 1-4, further comprising:
an insulating member (30) configured to surround an outer surface of the connection portion (10).

6. The bus bar system (L; L ') according to any one of claims 1-5, wherein ends of the plurality of members (1; 7) also comprise cut-outs (23) such that the ends of the plurality of members (1; 7) deform when a force is applied to the plurality of members (1; 7), or wherein the plurality of couplings (3) extend through the component (2) and protrude from outer surfaces of the plurality of members (1; 7) so as to couple additional members (9) to the plurality of members in a direction not perpendicular to a longitudinal cross-section of the connection portion (10).

7. The bus bar system (L; L') according to any one of claims 1-6, wherein there are non-planar contact interfaces among the plurality of members (1; 7).

8. The bus bar system (L; L') according to any one of claims 1-7, further comprising:
a fitting (31) configured to surround an outer surface of the connection portion (10); and
an additional member (9) configured to be coupled and fixed to the connection portion (10) by the fitting (31), particularly wherein the fitting (31) comprises a plurality of parts configured to be completely separable from each other; or
the plurality of parts are configured to be only partially separable from each other.

9. The bus bar system (L; L') according to any one of claims 1-8, wherein the longitudinal cross-section of the connection portion (10) has a shape selected from one of: circular, elliptical, polygonal, and polygonal with rounded corners.

10. An apparatus for bus bar connection comprising:
a plurality of bus bars having hollow cavities (11); and
a fitting (31), wherein the fitting couples and fixes the plurality of bus bars to each other, and the fitting has:
a first end (32) surrounding a portion of an outer surface of a first bus bar (1) of the plurality of bus bars, and
a second end (33) surrounding a portion of an outer surface of a second bus bar (9) of the plurality of bus bars.

11. The apparatus for bus bar connection according to claim 10, wherein the fitting (31) has a plurality of parts configured to be completely separable from each other; or
the plurality of parts are configured to be only partially separable from one another.

12. The apparatus for bus bar connection according to any one of claims 10 and 11, wherein the fitting (31) further comprises a third end (34), wherein the third end (34):
surrounds another portion of an outer surface of a first bus bar (1) of the plurality of bus bars; or
surrounds a portion of an outer surface of a third bus bar of the plurality of bus bars.

13. The apparatus for bus bar connection according to any one of claims 10 to 12, wherein the second bus bar extends in a different direction from the first bus bar.

14. An electrical assembly comprising the bus bar system (L; L') according to any one of claims 1 to 9.

15. An electrical equipment comprising the electrical assembly according to claim 14.
